(19) Europäisches Patentamt
European Patent Office
Office européen des brevets

(11) **EP 2 729 527 B1**

(12) # EUROPEAN PATENT SPECIFICATION

(45) Date of publication and mention
of the grant of the patent:
**09.11.2016 Bulletin 2016/45**

(51) Int Cl.:
**C08L 23/08** (2006.01)   **C08J 5/18** (2006.01)

(21) Application number: **12735741.6**

(22) Date of filing: **02.07.2012**

(86) International application number:
**PCT/US2012/045237**

(87) International publication number:
**WO 2013/009514 (17.01.2013 Gazette 2013/03)**

(54) **POLYETHYLENE BLEND COMPOSITION SUITABLE FOR BLOWN FILM, METHOD OF PRODUCING THE SAME, AND FILMS MADE THEREFROM**

POLYETHYLENZUSAMMENSETZUNG FÜR EIN BLASFOLIEN VERFAHREN UND DARAUS HERGESTELLTE FILME

UNE COMPOSITION DE POLYÉTHYLÈNE ADAPTÉE POUR UN PROCÉDÉ DE FILM SOUFFLÉ ET FILMS OBTENUS À PARTIR DE CEUX-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.07.2011 US 201161505875 P**

(43) Date of publication of application:
**14.05.2014 Bulletin 2014/20**

(73) Proprietor: **Dow Global Technologies LLC**
**Midland, MI 48641-1967 (US)**

(72) Inventors:
• **EFFLER, Lawrence J.**
  **Rosharon, TX 77583 (US)**
• **SAVARGAONKAR, Nilesh R.**
  **Pearland, TX 77584 (US)**
• **KARJALA, Teresa P.**
  **Lake Jackson, TX 77566 (US)**
• **SERRAT, Cristina**
  **Sugar Land, TX 77479 (US)**

• **WANG, Jian**
  **Rosharon, TX 77583 (US)**

(74) Representative: **Boult Wade Tennant**
**Verulam Gardens**
**70 Gray's Inn Road**
**London WC1X 8BT (GB)**

(56) References cited:
**WO-A1-2006/033819   WO-A1-2011/082045**
**US-A1- 2004 236 041   US-A1- 2008 139 718**
**US-A1- 2009 192 270   US-A1- 2010 317 804**

• **COOKE DAVID L ET AL: "Addition Of Branched Molecules and High Molecular Weight Molecules to Improve Optical Properties of LLDPE Film", JOURNAL OF PLASTIC FILM AND SHEETING, LANCASTER, PA, US, vol. 5, no. 4, 1 January 1989 (1989-01-01) , pages 290-307, XP008092293, ISSN: 8756-0879, DOI: 10.1177/875608798900500406**

**Description**

**Field of Invention**

The instant invention relates to a polyethylene blend composition suitable for blown film, method of producing the same, and films made therefrom.

**Background of the Invention**

The use of polymeric materials such as ethylene-based compositions in an extrusion blown film process is well-known. The extrusion blown film process employs an extruder which heats, melts, and conveys the molten polymeric material and forces it through an annular die. The ethylene-based film is drawn from the die and formed into a tubular shape and eventually passed through a pair of draw or nip rollers. Internal compressed air is then introduced from the mandrel causing the tube to increase in diameter forming a bubble of the desired size. Thus, the blown film is stretched in two directions, namely in the axial direction, i.e. by the use of forced air which expands the diameter of the bubble, and in the lengthwise direction of the bubble, i.e. by the action of a winding element which pulls the bubble through the machinery. External air is also introduced around the bubble circumference to cool the melt as it exits the die. The film width is varied by introducing more or less internal air into the bubble thus increasing or decreasing the bubble size. The film thickness is controlled primarily by increasing or decreasing the speed of the draw roll or nip roll to control the draw-down rate.

The bubble is then collapsed into two doubled layers of film immediately after passing through the draw or nip roll. The cooled film can then be processed further by cutting or sealing to produce a variety of consumer products.

US-A-2010/0317804 discloses an ethylene-based polymer characterized as having a density from 0.9 to 0.94 g/cm$^3$, a molecular weight distribution from 8 to 30, a melt index from 0.1 to 50 g/ 10 mins, a gpcBR value greater than 1.4 as determined by a gpcBR Branching Index and a Y value less than 2. This ethylene-based polymer can be blended with other polymers such as LLDPE and then converted into film, especially blown film.

US-A-2009/0192270 discloses ethylene-based polymer compositions which include blends of a linear low density polyethylene prepared with metallocene catalyst and a low density polyethylene. Articles composed of such ethylene-based polymer compositions include blown films.

Despite the research efforts in producing the polymeric materials suitable for blown films, there is still a need for a polyethylene blend composition suitable for blown film, providing improved output rates. Furthermore, there is still a need for a method of producing a polyethylene blend composition suitable for blown film, providing improved output rates.

**Summary of the Invention**

The instant invention provides a polyethylene blend composition suitable for blown film, method of producing the same, and films made therefrom.

In one embodiment, the instant invention provides a polyethylene blend composition suitable for blown film comprising the melt blending product of: (a) from 0.5 to 5 percent or less by weight of a first low density polyethylene (first LDPE) having a density in the range of from 0.915 to 0.935 g/cm$^3$, and a melt index ($I_2$) in the range of from greater than 0.8 to less than or equal to 5 g/10 minutes, and a molecular weight distribution ($M_w/M_n$) in the range of from 6 to 10; (b) from 5 to 50 percent by weight of a second low density polyethylene (second LDPE) having a density in the range of from 0.915 to 0.935 g/cm$^3$, and a melt index ($I_2$) in the range of from 0.1 to less than or equal to 5 g/10 minutes, and a molecular weight distribution ($M_w/M_n$) in the range of from 6 to 10; with the proviso that the second LDPE has a melt index ($I_2$) that is different from the melt index ($I_2$) of first LDPE; (c) from 44 percent or greater by weight of a heterogeneous linear low density polyethylene (hLLDPE) having a density in the range of from 0.917 to 0.950 g/cm$^3$, and a melt index ($I_2$) in the range of from 0.1 to less than or equal to 5 g/10 minutes; (d) optionally a hydrotalcite based neutralizing agent (e) optionally one or more nucleating agents; and (f) optionally one or more antioxidants. When the polyethylene blend composition is formed into a film via a blown film process, the output rate is improved at least 6 percent, for example 7 percent, relative to a polyethylene blend composition consisting essentially of (a) a similar heterogeneous linear low density polyethylene component; and (b) a similar second low density polyethylene component.

In an alternative embodiment, the instant invention further provides a blown film comprising the inventive polyethylene blend composition.

In another alternative embodiment, the instant invention further provides an article comprising one or more blown films comprising the inventive polyethylene blend.

In another alternative embodiment, the instant invention further provides a container device comprising: one or more substrates; and one or more layers comprising one or more blown films comprising the inventive polyethylene blend composition.

In an alternative embodiment, the instant invention provides a polyethylene blend composition suitable for blown film, blown films and articles made therefrom, in accordance with any of the preceding embodiments, except that the polyethylene blend composition comprises 0.5 to 3.5 percent by weight of the first LDPE; for example from 1 to 3.5 weight percent; or in the alternative, from 1.5 to 3 weight percent.

In an alternative embodiment, the instant invention provides a polyethylene blend composition suitable for blown film, blown films and articles made therefrom, in accordance with any of the preceding embodiments, except that the polyethylene blend composition comprises 5 to 45 percent by weight of the second LDPE; for example from 10 to 45 weight percent; or in the alternative, from 15 to 40 weight percent.

In an alternative embodiment, the instant invention provides a polyethylene blend composition suitable for blown film, blown films and articles made therefrom, in accordance with any of the preceding embodiments, except that the first LDPE has a density in the range of from 0.916 to 0.930 $g/cm^3$; or in the alternative, from 0.917 to 0.925 $g/cm^3$; or in the alternative, from 0.917 to 0.922 $g/cm^3$.

In an alternative embodiment, the instant invention provides a polyethylene blend composition suitable for blown film, blown films and articles made therefrom, in accordance with any of the preceding embodiments, except that the second LDPE has a density in the range of from 0.916 to 0.930 $g/cm^3$; or in the alternative, from 0.917 to 0.925 $g/cm^3$; or in the alternative, from 0.917 to 0.922 $g/cm^3$.

In an alternative embodiment, the instant invention provides a polyethylene blend composition suitable for blown film, blown films and articles made therefrom, in accordance with any of the preceding embodiments, except that first LDPE has a melt index ($I_2$) in the range of from 1 to 4 g/10 minutes; or in the alternative, from 1.2 to 3.5 g/10 minutes; or in the alternative, from 1.5 to 3 g/10 minutes; or in the alternative, from 1.6 to 2.7 g/10 minutes.

In an alternative embodiment, the instant invention provides a polyethylene blend composition suitable for blown film, blown films and articles made therefrom, in accordance with any of the preceding embodiments, except that second LDPE has a melt index ($I_2$) in the range of from 0.1 to 4 g/10 minutes; or in the alternative, from 0.1 to 3.5 g/10 minutes; or in the alternative, from 0.1 to 3 g/10 minutes; or in the alternative, from 0.1 to 2.0 g/10 minutes.

In an alternative embodiment, the instant invention provides a polyethylene blend composition suitable for blown film, blown films and articles made therefrom, in accordance with any of the preceding embodiments, except that the first LDPE has a molecular weight distribution ($M_w/M_n$) in the range of from 6 to 9.5; or in the alternative, from 6 to 9; or in the alternative, from 6 to 8.5; or in the alternative, from 7.5 to 9.

In an alternative embodiment, the instant invention provides a polyethylene blend composition suitable for blown film, blown films and articles made therefrom, in accordance with any of the preceding embodiments, except that the second LDPE has a molecular weight distribution ($M_w/M_n$) in the range of from 6 to 9.5; or in the alternative, from 6 to 9; or in the alternative, from 6 to 8.5; or in the alternative, from 7.5 to 9.

In an alternative embodiment, the instant invention provides a polyethylene blend composition suitable for blown film, blown films and articles made therefrom, in accordance with any of the preceding embodiments, except that the polyethylene blend composition suitable for blown film comprises 92 percent or greater by weight of the heterogeneous linear low density polyethylene (hLLDPE); or in the alternative, 94 percent or greater by weight of the hLLDPE; or in the alternative, 95 percent or greater by weight of the hLLDPE; or in the alternative, 96 percent or greater by weight of the hLLDPE.

In an alternative embodiment, the instant invention provides a polyethylene blend composition suitable for blown film, blown films and articles made therefrom, in accordance with any of the preceding embodiments, except that the hLLDPE has a density in the range of from 0.917 to 0.930 $g/cm^3$; or in the alternative, from 0.917 to 0.925 $g/cm^3$; or in the alternative, from 0.918 to 0.922 $g/cm^3$; or in the alternative, from 0.919 to 0.921 $g/cm^3$.

In an alternative embodiment, the instant invention provides a polyethylene blend composition suitable for blown film, blown films and articles made therefrom, in accordance with any of the preceding embodiments, except that the hLLDPE has a melt index ($I_2$) in the range of from 0.5 to 3 g/10 minutes; for example, from 0.5 to 2 g/10 minutes; or in the alternative, from 0.5 to 1.5 g/10 minutes; or in the alternative, from 0.8 to 2 g/10 minutes; or in the alternative, from 0.8 to 1.5 g/10 minutes; or in the alternative, from 0.8 to 1.2 g/10 minutes.

In an alternative embodiment, the instant invention provides a polyethylene blend composition suitable for blown film, blown films and articles made therefrom, in accordance with any of the preceding embodiments, except that the polyethylene blend composition has a peak at 32.7 ppm measured via $^{13}$CNMR.

In an alternative embodiment, the instant invention provides a polyethylene blend composition suitable for blown film, blown films and articles made therefrom, in accordance with any of the preceding embodiments, except that the melt index of the first LDPE and the melt index of the second LDPE satisfy the following relationship: melt index of the second LDPE + 0.5 < melt index of the first LDPE.

## Detailed Description of the Invention

The instant invention provides a polyethylene blend composition suitable for blown film, method of producing the same, and films made therefrom. The term "polyethylene blend composition," as used herein, refers to a physical blend of at least a first low density polyethylene, a second low density polyethylene, and a heterogeneous linear low density polyethylene, as described herein.

The instant invention provides a polyethylene blend composition suitable for blown film comprising the melt blending product of: (a) from 0.5 to 5 percent or less by weight of a first low density polyethylene having a density in the range of from 0.915 to 0.935 $g/cm^3$, and a melt index ($I_2$) in the range of from greater than 0.8 to less than or equal to 5 g/10 minutes, and a molecular weight distribution ($M_w/M_n$) in the range of from 6 to 10; (b) from 5 to 50 percent by weight of a second low density polyethylene having a density in the range of from 0.915 to 0.935 $g/cm^3$, and a melt index ($I_2$) in the range of from 0.1 to less than or equal to 5 g/10 minutes, and a molecular weight distribution ($M_w/M_n$) in the range of from 6 to 10; with the proviso that the second low density polyethylene has a melt index ($I_2$) that is different from the melt index ($I_2$) of first low density polyethylene; (c) from 44 percent or greater by weight of a heterogeneous linear low density polyethylene having a density in the range of from 0.917 to 0.950 $g/cm^3$, and a melt index ($I_2$) in the range of from 0.1 to less than or equal to 5 g/10 minutes; (d) optionally a hydrotalcite based neutralizing agent; (e) optionally one or more nucleating agents; and (f) optionally one or more antioxidants. When the polyethylene blend composition is formed into a film via a blown film process, the output rate is improved at least 6 percent, for example 7 percent, relative to a polyethylene blend composition consisting essentially of (a) a similar heterogeneous linear low density polyethylene component; and (b) a similar second low density polyethylene component.

The polyethylene blend composition has a density in the range of 0.917 to 0.950 $g/cm^3$. All individual values and subranges from 0.917 to 0.950 $g/cm^3$ are included herein and disclosed herein; for example, the density can be from a lower limit of 0.917 or 0.919 $g/cm^3$ to an upper limit of 0.930, 0.940, 0.945, or 0.950 $g/cm^3$. For example, the polyethylene blend composition may have a density in the range of from 0.917 to 0.925 $g/cm^3$; or in the alternative, from 0.918 to 0.922 $g/cm^3$; or in the alternative, from 0.919 to 0.921 $g/cm^3$.

The polyethylene blend composition has a melt index ($I_2$) in the range of from 0.1 to 5 g/10 minutes. All individual values and subranges from 0.1 to 5 g/10 minutes are included herein and disclosed herein; for example, the melt index ($I_2$) can be from a lower limit of 0.1, 0.2, 0.5, or 0.8 g/10 minutes, to an upper limit of 1, 2, 3, 4, or 5 g/10 minutes. For example, the polyethylene blend composition may have a melt index ($I_2$) in the range of from 0.2 to 5 g/10 minutes; or in the alternative, from 0.2 to 3 g/10 minutes; or in the alternative, from 0.5 to 2 g/10 minutes.

In one embodiment, the polyethylene blend composition has a peak at 32.7 ppm measured via $^{13}$C NMR indicating the presence of the $C_3$ carbon of a $C_5$ or amyl branch of either the first or the second LDPE component.

In another embodiment, when the polyethylene blend composition is formed into a film via blown film process, the output rate is improved at least 6 percent, for example 7 percent, relative to a polyethylene blend composition consisting essentially of (a) a similar heterogeneous linear low density polyethylene component; and (b) a similar second low density polyethylene component.

**First Low Density Polyethylene (first LDPE) Component**

The polyethylene blend composition suitable for blown film according to the present invention comprises from 0.5 to 5 percent by weight of a first low density polyethylene (first LDPE); for example, or in the alternative, from 0.5 to 4 weight percent; or in the alternative, from 0.5 to 3 weight percent; or in the alternative, from 1 to 3.5 weight percent. The first LDPE has a density in the range of from 0.915 to 0.935 $g/cm^3$; for example, from 0.915 to 0.925 $g/cm^3$; or in the alternative, from 0.917 to 0.922 $g/cm^3$. The first LDPE has a melt index ($I_2$) in the range of from greater than 0.8 to less than or equal to 5 g/10 minutes; for example, from 1 to 3 g/10 minutes; or in the alternative, from 1.5 to 2.7 g/10 minutes. The first LDPE has a molecular weight distribution ($M_w/M_n$) in the range of from 6 to 10; for example, from 6 to 9.5; or in the alternative, from 6 to 9; or in the alternative, from 6 to 8.5; or in the alternative, from 7.5 to 9. Such first LDPE compositions are commercially available, for example, from The Dow Chemical Company.

**Second Low Density Polyethylene (second LDPE) Component**

The polyethylene blend composition suitable for blown film according to the present invention comprises from 5 to 50 percent by weight of a second low density polyethylene (second LDPE); for example, from 5 to 40 weight percent; or in the alternative, from 5 to 30 weight percent; or in the alternative, from 5 to 35 weight percent; or in the alternative, from 5 to 25 weight percent. The second LDPE has a density in the range of from 0.915 to 0.935 $g/cm^3$; for example, from 0.915 to 0.925 $g/cm^3$; or in the alternative, from 0.918 to 0.922 $g/cm^3$. The second LDPE has a melt index ($I_2$) in the range of from 0.1 to less than or equal to 5 g/10 minutes; for example, from 0.1 to 3 g/10 minutes; or in the alternative, from 0.1 to 2 g/10 minutes, with the proviso that the second LDPE has a melt index that is different from the melt index of second LDPE. In one embodiment, the melt index of the first LDPE and the second LDPE satisfy the following relationship: melt index of the second LDPE + 0.5 < melt index of the first LDPE. The second LDPE has a molecular weight distribution ($M_w/M_n$) in the range of from 6 to 10; for example, from 6.5 to 9; or in the alternative, from 7.5 to 9.

Such second LDPE compositions are commercially available, for example, from The Dow Chemical Company.

**Heterogeneous Linear Low Density Polyethylene (hLLDPE) Component**

The polyethylene blend composition suitable for blown film according to the present invention comprises 44 percent or greater by weight of a heterogeneous linear low density polyethylene (hLLDPE); for example, from 50 to 99 weight percent; or in the alternative from 60 to 95 weight percent; or in the alternative from 80 to 95 weight percent. The term heterogeneous linear low density polyethylene (hLLDPE), as used herein, refers to a linear low density polyethylene that is prepared via a heterogeneous catalyst system including 2 or more active sites for polymerization.

The hLLDPE has a density in the range of from 0.917 to 0.950 $g/cm^3$. All individual values and subranges from 0.917 to 0.950 $g/cm^3$ are included herein and disclosed herein; for example, the density can be from a lower limit of 0.917, 0.918, or 0.919 $g/cm^3$ to an upper limit of 0.930, 0.941, 0.947, or 0.950 $g/cm^3$. For example, the hLLDPE may have a density in the range of from 0.917 to 0.950 $g/cm^3$; or in the alternative, from 0.917 to 0.925 $g/cm^3$; or in the alternative, from 0.918 to 0.925 $g/cm^3$; or in the alternative, from 0.918 to 0.922 $g/cm^3$; or in the alternative, from 0.919 to 0.921 $g/cm^3$.

The hLLDPE has a molecular weight distribution ($M_w/M_n$) in the range of from 3.5 to 5.

The hLLDPE has a melt index ($I_2$) in the range of from 0.1 to 5 g/10 minutes. All individual values and subranges from 0.1 to 5 g/10 minutes are included herein and disclosed herein; for example, the melt index ($I_2$) can be from a lower limit of 0.1, 0.2, 0.5, or 0.8 g/10 minutes, to an upper limit of 1, 2, 3, 4, or 5 g/10 minutes. For example, the hLLDPE may have a melt index ($I_2$) in the range of from 0.2 to 5 g/10 minutes; or in the alternative, from 0.2 to 3 g/10 minutes; or in the alternative, from 0.5 to 2 g/10 minutes.

The hLLDPE may have a melt flow ratio ($I_{10}/I_2$) in the range of from 6 to 10. All individual values and subranges from 6 to 10 are included herein and disclosed herein. For example, the hLLDPE may have a melt flow ratio ($I_{10}/I_2$) in the range of from 7 to 10; or in the alternative, from 7 to 9.

The hLLDPE may have 2 or more peaks on the DSC heating curve, measured according to the Differential Scanning Calorimetry (DSC) method, via second heat scan.

The hLLDPE may comprise less than 35 percent by weight of units derived from one or more $\alpha$-olefin comonomers. All individual values and subranges from less than 35 weight percent are included herein and disclosed herein; for example, the hLLDPE may comprise less than 25 percent by weight of units derived from one or more $\alpha$-olefin comonomers; or in the alternative, less than 20 percent by weight of units derived from one or more $\alpha$-olefin comonomers; or in the alternative, less than 15 percent by weight of units derived from one or more $\alpha$-olefin comonomers; or in the alternative, less than 10 percent by weight of units derived from one or more $\alpha$-olefin comonomers.

The $\alpha$-olefin comonomers typically have no more than 20 carbon atoms. For example, the $\alpha$-olefin comonomers may preferably have 3 to 10 carbon atoms, and more preferably 3 to 8 carbon atoms. Exemplary $\alpha$-olefin comonomers include, but are not limited to, propylene, 1-butene, 1-pentene, 1-hexene, 1-heptene, 1-octene, 1-nonene, 1-decene, and 4-methyl-1-pentene. The one or more $\alpha$-olefin comonomers may, for example, be selected from the group consisting of propylene, 1-butene, 1-hexene, and 1-octene; or in the alternative, from the group consisting of 1-hexene and 1-octene.

The hLLDPE may comprise at least 65 percent by weight of units derived from ethylene. All individual values and subranges from at least 65 weight percent are included herein and disclosed herein; for example, the hLLDPE may comprise at least 75 percent by weight of units derived from ethylene; or in the alternative, at least 85 percent by weight of units derived from ethylene; or in the alternative, at least 90 percent by weight of units derived from ethylene.

The hLLDPE may further be compounded with one or more additional components such as other polymers and/or additives. Such additives include, but are not limited to, hydrotalcite based neutralizing agents, antistatic agents, color enhancers, dyes, lubricants, fillers, pigments, primary antioxidants, secondary antioxidants, processing aids, UV stabilizers, nucleating agents, and/or combinations thereof. The hLLDPE may contain any amounts of additives. The hLLDPE may comprise from 0 to 10 percent by the combined weight of such additives, based on the combined weight of hLLDPE and such additives.

Any conventional ethylene (co)polymerization reaction may be employed to produce the hLLDPE. Such conventional ethylene (co)polymerization reactions include, but are not limited to, gas phase polymerization process, slurry phase polymerization process, solution phase polymerization process, and combinations thereof using one or more conventional reactors, e.g. fluidized bed gas phase reactors, loop reactors, stirred tank reactors, batch reactors in parallel, series, and/or any combinations thereof.

Such hLLDPE are commercially available under the tradename DOWLEX™ from The Dow Chemical Company.

**Additives**

The polyethylene blend composition may further comprise one or more additional additives. Such additives include, but are not limited to, one or more hydrotalcite based neutralizing agents, one or more nucleating agents, one or more antistatic agents, one or more color enhancers, one or more dyes, one or more lubricants, one or more fillers, one or more pigments, one or more primary antioxidants, one or more secondary antioxidants, one or more processing aids, one or more UV stabilizers, and/or combinations thereof. The polyethylene blend composition may comprise any amounts of such additives. The polyethylene blend composition may comprise from 0 to 10 percent by the combined weight of such additives, based on the total weight of the polyethylene blend composition.

## Production

The polyethylene blend composition is prepared via any conventional melt blending process such as extrusion via an extruder, e.g. single or twin screw extruder. The first LDPE, second LPDE, hLLDPE, and optionally one or more additives may be melt blended in any order via one or more extruders to form a uniform polyethylene blend composition.

## Applications

The polyethylene blend composition may be formed into a film via, for example, a blown film process. In one embodiment, when the polyethylene blend composition is formed into a film via a blown film process, the output rate is improved at least 6 percent, for example 7 percent, relative to a polyethylene blend composition consisting essentially of (a) a similar heterogeneous linear low density polyethylene component; and (b) a similar second low density polyethylene component. In one embodiment, the polyethylene blend composition may be formed into a multi-layer blown film structure. In another embodiment, the polyethylene blend composition may be formed into a single layer or a multi-layer blown film structure associated with one or more substrates. The blown films prepared according to the present invention may be used as lamination films where the blown polyethylene film is adhesively laminated to a substrate such as biaxially oriented polypropylene (BOPP) film or biaxially oriented polyethylene terephthalate (BOPET) film, liner films, sealant webs, shrink films, stretch films. The blown films according to the present invention have a thickness in the range of from 0.02 to 0.13 mm (0.8 to 5 mils).

## Examples

The examples of the instant invention demonstrate that when the polyethylene blend composition is formed into a film via a blown film process, the output rate is improved at least 6 percent relative to a similar polyethylene blend composition consisting essentially of (a) 80 percent by weight of a heterogeneous linear low density polyethylene having a melt index ($I_2$) of approximately 1.0 g/10 minutes and a density of approximately 0.92 g/cm$^3$; and (b) 20 percent by weight of a second low density polyethylene component having a melt index ($I_2$) of approximately 0.68 g/10 minutes, and a density of 0.92 g/cm$^3$.

## Inventive Composition 1

Inventive Composition 1 is a polyethylene blend composition comprising the melt blending product of (a) 3 percent by weight of a first low density polyethylene (LDPE-1) component having a melt index ($I_2$) of approximately 1.85 g/10 minutes, and a density of 0.919 g/cm$^3$, as further defined in Table 1, provided by The Dow Chemical Company; and (b) 20 percent by weight of a second low density polyethylene (LDPE-2) component having a melt index ($I_2$) of approximately 0.68 g/10 minutes, and a density of 0.920 g/cm$^3$, as further defined in Table 1, provided by The Dow Chemical Company; (c) 77 percent by weight of a heterogeneous linear low density polyethylene 1 (hLLDPE-1) component, which is a linear low density polyethylene (LLDPE) prepared via a Ziegler-Natta catalyst in a single solution phase reactor, having a Melt index ($I_2$) of approximately 1.0 g/10 minutes and a density of approximately 0.92 g/cm$^3$, and further described in Table 1, commercially available under the tradename DOWLEX™ 2045G from The Dow Chemical Company. The properties of the Inventive Composition 1 are measured, and reported in Table 2.

## Inventive Composition 2

Inventive Composition 2 is a polyethylene blend composition comprising the melt blending product of (a) 3 percent by weight of a first low density polyethylene (LDPE-1) having a melt index ($I_2$) of approximately 1.85 g/10 minutes, and a density of 0.919 g/cm$^3$, as further defined in Table 1, provided by The Dow Chemical Company; (b) 20 percent by weight of a second low density polyethylene (LDPE-2) component having a melt index ($I_2$) of approximately 0.68 g/10 minutes, and a density of 0.92 g/cm$^3$, as further defined in Table 1, provided by The Dow Chemical Company; (c) 77 percent by weight of a heterogeneous linear low density polyethylene 2 (hLLDPE 2) component (including 750 parts of DHT-4A per million parts of the hLLDPE 2), which is a linear low density polyethylene (LLDPE) prepared via a Ziegler-Natta catalyst in a single solution phase reactor, having a melt index ($I_2$) of approximately 1.0 g/10 minutes and a density of approximately 0.92 g/cm$^3$, and further described in Table 1, provided by The Dow Chemical Company. The properties of the Inventive Composition 2 are measured, and reported in Table 2.

## Comparative Composition A

Comparative Composition A is a polyethylene blend composition comprising the melt blending product of (a) 80 percent by weight of a heterogeneous linear low density polyethylene, which is a linear low density polyethylene (hLLDPE-1), further described in Table 1, prepared via a Ziegler-Natta catalyst in a single solution phase reactor, having a melt index (I$_2$) of approximately 1.0 g/10 minutes and a density of approximately 0.92 g/cm$^3$, commercially available under the tradename DOWLEX™ 2045G from The Dow Chemical Company; and (b) 20 percent by weight of a second low density polyethylene (LDPE-2) component having a melt index (I$_2$) of approximately 0.68 g/10 minutes, and a density of 0.92 g/cm$^3$, as further defined in Table 1, provided by The Dow Chemical Company. The properties of the Comparative Composition A are measured, and reported in Table 2.

## Comparative Composition B

Comparative Composition B is a polyethylene blend composition comprising the melt blending product of (a) 77 percent by weight of a heterogeneous linear low density polyethylene (hLLDPE-1), which is a linear low density polyethylene (LLDPE) prepared via a Ziegler-Natta catalyst in a single solution phase reactor, having a melt index (I$_2$) of approximately 1.0 g/10 minutes and a density of approximately 0.92 g/cm$^3$, commercially available under the tradename DOWLEX™ 2045G from The Dow Chemical Company; and (b) 23 percent by weight of a second low density polyethylene (LDPE-2) component having a melt index (I$_2$) of approximately 0.68 g/10 minutes, and a density of 0.92 g/cm$^3$, as further defined in Table 1, provided by The Dow Chemical Company. The properties of the Comparative Composition B are measured, and reported in Table 2.

## Inventive Films 1 and 2

Inventive Compositions 1 and 2 are formed into Inventive Films 1 and 2, respectively, via a blown film process based on the process conditions reported in Table 3. Inventive Films 1 and 2, monolayer films, were tested for their properties, and the results are reported in Table 4. Note that the film properties reported in Table 4 are for films made at standard rates of 0.66 g/s/cm (10 lb/hr/in) or 113.4 kg/hr (250 lb/hr).

## Comparative Films A and B

Comparative Compositions A and B are formed into Comparative Films A and B, respectively, via a blown film process based on the process conditions reported in Table 3. Comparative Films A and B, monolayer films, are tested for their properties, and the results are reported in Table 4. Note that the film properties reported in Table 4 are for films made at standard rates of 0.66 g/s/cm (10 lb/hr/in) or 113.4 kg/hr (250 lb/hr).

**Table 1**

|  | Units | LDPE-1 | LDPE-2 | hLLDPE 1 | hLLDPE 2 |
|---|---|---|---|---|---|
| **Density** | g/cm$^3$ | 0.919 | 0.92 | 0.92 | 0.921 |
| **I$_2$** | g/10 min | 1.85 | 0.68 | 0.97 | 1.01 |
| **I$_{10}$/I$_2$** |  | 14.3 | 15.6 | 7.8 | 7.4 |
| **Viscosity (0.1 rad/s)** | Pa.s | 8,863 | 19,398 | 8,757 | 8,089 |
| **Viscosity (1.0 rad/s)** | Pa.s | 4,639 | 8,337 | 6,939 | 6,595 |
| **Viscosity (10 rad/s)** | Pa.s | 1,658 | 2,580 | 4,085 | 4,008 |
| **Viscosity (100 rad/s)** | Pa.s | 464 | 645 | 1,606 | 1,618 |
| **Tan Delta (0.1 rad/s)** |  | 3.1 | 2.1 | 9.3 | 10.8 |
| **Melt Strength** | cN | 9.2 | 13.3 | 2.9 | 3 |
| **M$_n$** | g/mol | 11,628 | 15,460 | 24,870 | 26,070 |
| **M$_w$** | g/mol | 94,485 | 103,280 | 113,220 | 110,980 |

(continued)

| | Units | LDPE-1 | LDPE-2 | hLLDPE 1 | hLLDPE 2 |
|---|---|---|---|---|---|
| $M_z$ | g/mol | 321,061 | 329,700 | 374,000 | 335,200 |
| $M_w/M_n$ | | 8.13 | 7.85 | 4.55 | 4.26 |
| $T_{m1}$ (DSC) | °C | 109.2 | 109.9 | 120.1 | 120.2 |
| $T_{m2}$ (DSC) | °C | | | 109.6 | 110.8 |
| $T_c$ (DSC) | °C | 95.7 | 97 | 108.1 | 107.8 |
| Heat of fusion | J/g | 136.8 | 148.3 | 147.6 | 150.8 |

GPC properties are based on the conventional calibration of the High Temperature GPC.

**Table 2**

| Polymer Property | Units | Inventive Composition 1 | Inventive Composition 2 | Comparative Composition A | Comparative Composition B |
|---|---|---|---|---|---|
| Density | g/cm$^3$ | 0.920 | 0.922 | 0.920 | 0.921 |
| $I_2$ | g/10 min | 0.77 | 0.82 | 0.75 | 0.73 |
| $I_{10}/I_2$ | | 8.7 | 8.7 | 8.8 | 8.7 |
| Viscosity (0.1 rad/s) | Pa.s | 11750 | 10989 | 12008 | 12118 |
| Viscosity (1.0 rad/s) | Pa.s | 7766 | 7324 | 7921 | 7962 |
| Viscosity (10 rad/s) | Pa.s | 3891 | 3693 | 3955 | 3973 |
| Viscosity (100 rad/s) | Pa.s | 1394 | 1341 | 1414 | 1420 |
| Tan Delta (0.1 rad/s) | | 4.9 | 5.1 | 4.8 | 4.8 |
| Melt Strength | cN | 12.1 | 12.2 | 12.4 | 12.6 |
| $M_n$ | g/mol | 21740 | 23720 | 23140 | 21980 |
| $M_w$ | g/mol | 113940 | 112350 | 116310 | 114960 |
| $M_z$ | g/mol | 365600 | 351100 | 377100 | 367800 |
| $M_w/M_n$ | | 5.24 | 4.74 | 5.03 | 5.23 |
| $T_{m1}$ (DSC) | °C | 121.4 | 121 | 121 | 121.7 |
| $T_{m2}$ (DSC) | °C | 109.5 | 110.3 | 109.2 | 109.8 |
| $T_c$ (DSC) | °C | 109.5 | 109.6 | 109.6 | 109.4 |
| Heat of fusion | J/g | 147 | 150.8 | 148.6 | 148.6 |

GPC properties are based on the conventional calibration of the High Temperature GPC.

Table 3

| Film Fabrication | Units | Inventive Composition 1 | Inventive Example 2 | Comparative Example A | Comparative Example B |
|---|---|---|---|---|---|
| Max output rate | kg/hr (lbs/hr) | 217 (479) | 229 (504) | 202(445) | 210 (463) |
| Max output rate | g/s/cm (lbs/hr/inch) | 1.27 (19.16) | 1.33 (20.16) | 1.18 (17.80) | 1.23 (18.52) |
| Rate improvement over Comparative Composition A | % | 7.6 | 13.3 | 0 | 4.0 |
| Frost Line Height | cm (inch) | 193 (76) | 183 (72) | 175 (69) | 175 (69) |
| Horsepower | W (HP) | 6(8) | 7.5 (10) | 5.2 (7) | 5.2 (7) |
| Screen Pressure | MPa (psi) | 30.5 (4,360) | 33.5 (4,780) | 30.6 (4,370) | 30.3 (4,330) |
| Melt Temp. | °C (°F) | 248 (478) | 249 (481 ) | 247(476) | 247.2 (477) |

Table 4

| Film Property | Units | Inventive Example 1 | Inventive Example 2 | Comparative Example A | Comparative Example B |
|---|---|---|---|---|---|
| Film Thickness | $\mu$m (mil) | 50.8(2.0) | 50.8(2.0) | 50.8(2.0) | 50.8(2.0) |
| Dart Impact Resistance | g | 217 | 141 | 180 | 211 |
| Tear: Elmendorf - MD | g/$\mu$m (g/mil) | 7.7(197) | 5.4(139) | 7.7(198) | 7.3 (186) |
| Tear: Elmendorf - CD | g/$\mu$m (g/mil) | 28.2 (724) | 27.1 (695) | 28.4 (728) | 28.2 (723) |
| Puncture Strength | $KN/m^2$ ($ft*1b_f/in^3$) | 210930 (237) | 160200 (180) | 230510 (259) | 228730 (257) |
| Total Haze | % | 6.6 | 7.7 | 6.4 | 6.6 |
| Internal Haze | % | 2.6 | 2.6 | 2.4 | 2.6 |
| Gloss | % | 72.0 | 65.8 | 71.6 | 71.3 |
| Secant Modulus - CD (1%) | MPa (psi) | 276 (39,419) | 306 (43,663) | 276 (39,409) | 267 (38,077) |
| Secant Modulus - CD (2%) | MPa (psi) | 232 (33,199) | 255 (36,423) | 229 (32,772) | 224 (31,921) |
| Secant Modulus - MD (1%) | MPa (psi) | 239 (34,072) | 247 (35,313) | 238 (33,960) | 237 (33,830) |
| Secant Modulus - MD (2%) | MPa (psi) | 206 (29,469) | 214 (30,624) | 203 (28,941) | 206 (29,360) |

## Test Methods

Test methods include the following:

### Melt index

Melt indices ($I_2$ and $I_{10}$) were measured in accordance to ASTM D-1238 at 190°C and at 2.16 kg and 10 kg load, respectively. Their values are reported in g/10 min.

### Density

Samples for density measurement were prepared according to ASTM D4703. Measurements were made within one hour of sample pressing using ASTM D792, Method B.

### Dynamic shear rheology

Samples were compression-molded into 3 mm thick x 25 mm diameter circular plaques at 177°C for 5 minutes under 10 MPa pressure in air. The sample was then taken out of the press and placed on the counter to cool.
Constant temperature frequency sweep measurements were performed on an ARES strain controlled rheometer (TA Instruments) equipped with 25 mm parallel plates, under a nitrogen purge. For each measurement, the rheometer was thermally equilibrated for at least 30 minutes prior to zeroing the gap. The sample was placed on the plate and allowed to melt for five minutes at 190°C. The plates were then closed to 2 mm, the sample trimmed, and then the test was started. The method has an additional five minute delay built in, to allow for temperature equilibrium. The experiments were performed at 190°C over a frequency range of 0.1-100 rad/s at five points per decade interval. The strain amplitude was constant at 10%. The stress response was analyzed in terms of amplitude and phase, from which the storage modulus (G'), loss modulus (G"), complex modulus (G*), dynamic viscosity ($\eta$*), and tan ($\delta$) or tan delta were calculated.

### Melt Strength

Melt strength measurements are conducted on a Gottfert Rheotens 71.97 (Göettfert Inc.; Rock Hill, SC) attached to a Gottfert Rheotester 2000 capillary rheometer. A polymer melt is extruded through a capillary die with a flat entrance angle (180 degrees) with a capillary diameter of 2.0 mm and an aspect ratio (capillary length/capillary diameter) of 15.
After equilibrating the samples at 190 °C for 10 minutes, the piston is run at a constant piston speed of 0.265 mm/second. The standard test temperature is 190 °C. The sample is drawn uniaxially to a set of accelerating nips located 100 mm below the die with an acceleration of 2.4 mm/second$^2$. The tensile force is recorded as a function of the take-up speed of the nip rolls. Melt strength is reported as the plateau force (cN) before the strand broke. The following conditions are used in the melt strength measurements: Plunger speed = 0.265 mm/second; wheel acceleration = 2.4 mm/s$^2$; capillary diameter = 2.0 mm; capillary length = 30 mm; and barrel diameter = 12 mm.

### DSC Crystallinity Determination

Differential Scanning Calorimetry (DSC) can be used to measure the crystallinity of a sample at a given temperature for a wide range of temperatures. For the Examples, a TA model Q1000 DSC (TA Instruments; New Castle, DE) equipped with an RCS (Refrigerated Cooling System) cooling accessory and an autosampler module is used to perform the tests. During testing, a nitrogen purge gas flow of 50 ml/minute is used. Each sample is pressed into a thin film and melted in the press at about 175 °C; the melted sample is then air-cooled to room temperature (~25 °C). A 3-10 mg sample of the cooled material is cut into a 6 mm diameter disk, weighed, placed in a light aluminum pan (ca 50 mg), and crimped shut. The sample is then tested for its thermal behavior.
The thermal behavior of the sample is determined by changing the sample temperature upwards and downwards to create a response versus temperature profile. The sample is first rapidly heated to 180 °C and held at an isothermal state for 3 minutes in order to remove any previous thermal history. Next, the sample is then cooled to -40 °C at a 10 °C/minute cooling rate and held at -40 °C for 3 minutes. The sample is then heated to 150 °C at 10 °C/minute heating rate. The cooling and second heating curves are recorded. The values determined are peak melting temperature ($T_m$), peak crystallization temperature ($T_c$), the heat of fusion ($H_f$), and the % crystallinity for polyethylene samples calculated using Equation 1:

$$\% \text{ Crystallinity} = [(H_f \text{ (J/g))}/(292 \text{ J/g})] \times 100 \quad (\text{Eq. 1})$$

The heat of fusion ($H_f$) and the peak melting temperature are reported from the second heat curve. The peak crystallization temperature is determined from the cooling curve.

**High Temperature Gel Permeation Chromatography**

The Gel Permeation Chromatography (GPC) system consists of a Waters (Milford, Mass) 150C high temperature chromatograph (other suitable high temperatures GPC instruments include Polymer Laboratories (Shropshire, UK) Model 210 and Model 220) equipped with an on-board differential refractometer (RI) (other suitable concentration detectors can include an IR4 infra-red detector from Polymer ChAR (Valencia, Spain)). Data collection is performed using Viscotek TriSEC software, Version 3, and a 4-channel Viscotek Data Manager DM400. The system is also equipped with an on-line solvent degassing device from Polymer Laboratories (Shropshire, United Kingdom).

Suitable high temperature GPC columns can be used such as four 30 cm long Shodex HT803 13 $\mu$m (micron) columns or four 30 cm Polymer Labs columns of 20-$\mu$m (micron) mixed-pore-size packing (MixA LS, Polymer Labs). The sample carousel compartment is operated at 140 °C and the column compartment is operated at 150 °C. The samples are prepared at a concentration of 0.1 grams of polymer in 50 milliliters of solvent. The chromatographic solvent and the sample preparation solvent contain 200 ppm of trichlorobenzene (TCB). Both solvents are sparged with nitrogen. The polyethylene samples are gently stirred at 160 °C for four hours. The injection volume is 200 microliters. The flow rate through the GPC is set at 1 ml/minute.

The GPC column set is calibrated by running 21 narrow molecular weight distribution polystyrene standards. The molecular weight (MW) of the standards ranges from 580 to 8,400,000, and the standards are contained in 6 "cocktail" mixtures. Each standard mixture has at least a decade of separation between individual molecular weights. The standard mixtures are purchased from Polymer Laboratories. The polystyrene standards are prepared at 0.025 g in 50 mL of solvent for molecular weights equal to or greater than 1,000,000 and 0.05 g in 50 mL of solvent for molecular weights less than 1,000,000. The polystyrene standards were dissolved at 80 °C with gentle agitation for 30 minutes. The narrow standards mixtures are run first and in order of decreasing highest molecular weight component to minimize degradation. The polystyrene standard peak molecular weights are converted to polyethylene molecular weight using Equation 2 (as described in Williams and Ward, J. Polym. Sci., Polym. Letters, 6, 621 (1968)):

$$M_{\text{polyethylene}} = A \times (M_{\text{polystyrene}})^B \quad (\text{Eq. 2}),$$

where M is the molecular weight of polyethylene or polystyrene (as marked), and B is equal to 1.0. It is known to those of ordinary skill in the art that A may be in a range of 0.38 to 0.44 and is determined at the time of calibration using a broad polyethylene standard. Use of this polyethylene calibration method to obtain molecular weight values, such as the molecular weight distribution (MWD or $M_w/M_n$), and related statistics (generally refers to conventional GPC or cc-GPC results), is defined here as the modified method of Williams and Ward.

**13CNM R**

The samples were prepared by adding approximately 2.7g of a 50/50 mixture of tetrachloroethane-$d_2$/orthodichlorobenzene containing 0.025 M Cr(AcAc)3 to 0.4g sample in a Norell 1001-7 10mm NMR tube, and then purging in a N2 box for 2 hours. The samples were dissolved and homogenized by heating the tube and its contents to 150°C using a heating block and heat gun. Each sample was visually inspected to ensure homogeneity. The data were collected using a Bruker 400 MHz spectrometer equipped with a Bruker Dual DUL high-temperature CryoProbe. The data were acquired at 57-80 hours per data file, a 7.3 sec pulse repetition delay (6 sec delay + 1.3 sec acquisition time), 90 degree flip angles, and inverse gated decoupling with a sample temperature of 120°C. All measurements were made on non spinning samples in a locked mode. Samples were homogenized immediately prior to insertion into the heated (125°C) NMR Sample changer, and were allowed to thermally equilibrate in the probe for 7 minutes prior to data acquisition. The branch number was calculated from the integral of the peak region at 32.7 ppm and its relative ratio of the peak of neat LDPE.

**Film Testing Conditions**

The following physical properties are measured on the films produced:

- **Total and Internal Haze:** Samples measured for internal haze and overall haze are sampled and prepared according to ASTM D 1746. Internal haze was obtained via refractive index matching using mineral oil on both sides of the films. A Hazegard Plus (BYK-Gardner USA; Columbia, MD) is used for testing.
- **45° Gloss:** ASTM D-2457.
- **1% Secant Modulus- MD (machine direction) and CD (cross direction):** ASTM D-882.
- **MD and CD Elmendorf Tear Strength:** ASTM D-1922
- **MD and CD Tensile Strength:** ASTM D-882
- **Dart Impact Strength:** ASTM D-1709, Method A

**Puncture Strength:** Puncture strength is measured on a Instron Model 4201 with Sintech Testworks Software Version 3.10. The specimen size is 15.24 cm x 15.24 cm (6" x 6") and 4 measurements are made to determine an average puncture value. The film is conditioned for 40 hours after film production and at least 24 hours in an ASTM controlled laboratory. A 45.4 kg (100 lb) load cell is used with a round specimen holder 31.90 cm (12.56") square. The puncture probe is a 1.27 cm (½") diameter polished stainless steel ball with a 19.1 cm (7.5") maximum travel length. There is no gauge length; the

probe is as close as possible to, but not touching, the specimen. The crosshead speed used is 25.4 cm (10")/minute. The thickness is measured in the middle of the specimen. The thickness of the film, the distance the crosshead traveled, and the peak load are used to determine the puncture by the software. The puncture probe is cleaned using a "Kimwipe" after each specimen.

**Determination of Maximum Output Rate of Blown Film**

Film samples are collected at a controlled rate and at a maximum rate. The controlled rate is 113.4 (250 lb/hr) which equals an output rate of 0.66 g/s/cm (10 lb/hr/inch) of die circumference. Note the die diameter used for the maximum output trials is an 20.3 cm (8") die so that for the controlled rate, as an example, the conversion between kg/hr (lb/hr) and kg/s/cm (lb/hr/inch) of die circumference is shown in Equation 3. Similarly, such an equation can be used for other rates, such as the maximum rate, by substituting the maximum rate in Equation 3 for the standard rate of 113.4 kg/hr (250 lb/hr) to determine the g/s/cm (lb/hr/inch) of die circumference.

$$\text{g/s/cm (Lb/Hr/Inch) of Die Circumference} = 113.4 \text{ kg/hr } ((250 \text{ Lb/Hr})) / (8 * \pi) = 10$$

$$(\text{Eq. 3})$$

The maximum rate for a given sample is determined by increasing the output rate to the point where bubble stability is the limiting factor. The extruder profile is maintained for both samples (standard rate and maximum rate), however the melt temperature is higher for the maximum rate samples due to the increased shear rate. The maximum rate is determined by maximizing both the internal bubble cooling and the external cooling via the air ring. The maximum bubble stability is determined by taking the bubble to the point where any one of the following things was observed (a) the bubble would not stay seated in the air ring (b) the bubble started to lose its shape (c) the bubble started to breathe in and out or (d) the frost line height would become unstable. At that point the rate is reduced to where the bubble is reseated in the air ring while maintaining the shape of the bubble and a steady frost line height and then a sample is collected. The cooling on the bubble is adjusted by adjusting the air ring and maintaining the bubble. This is taken as the maximum output rate while maintaining bubble stability.

Monolayer films were produced. The die diameter is 20.3 cm (8 inches), the die gap is 1778 μm (70 mils), the blow up ratio is 2.5, and internal bubble cooling is used.

**Claims**

1. A polyethylene blend composition suitable for blown film comprising the melt blending product of:

   from 0.5 to 5 percent or less by weight of a first low density polyethylene having a density in the range of from 0.915 to 0.935 g/cm$^3$ measured according to ASTM D792, method B, and a melt index ($I_2$) in the range of from greater than 0.8 to less than or equal to 5 g/10 minutes measured in accordance to ASTM D-1238 at 190°C and at 2.16 kg, and a molecular weight distribution ($M_w/M_n$) in the range of from 6 to 10;
   from 5 to 50 percent by weight of a second low density polyethylene having a density in the range of from 0.915 to 0.935 g/cm$^3$ measured according to ASTM D792, method B , and a melt index ($I_2$) in the range of from 0.1 to less than or equal to 5 g/10 minutes measured in accordance to ASTM D-1238 at 190°C and at 2.16 kg, and a molecular weight distribution ($M_w/M_n$) in the range of from 6 to 10; with the proviso that the second low density polyethylene has a melt index ($I_2$) that is different from the melt index ($I_2$) of first low density polyethylene; from 44 percent or greater by weight of a heterogeneous linear low density polyethylene having a density in the range of from 0.917 to 0.950 g/cm$^3$ measured according to ASTM D792, method B, and a melt index ($I_2$) in the range of from 0.1 to less than or equal to 5 g/10 minutes measured in accordance to ASTM D-1238 at 190°C and at 2.16 kg;

optionally a hydrotalcite based neutralizing agent;

optionally one or more nucleating agents; and

optionally one or more antioxidants.

2. The polyethylene blend composition of claim 1, wherein the polyethylene blend composition has a peak at 32.7 ppm measured via $^{13}$C NMR, indicating the presence of the $C_3$ carbon of a $C_5$ or amyl branch of either the first LDPE or second LDPE component.

3. A blown film comprising the polyethylene blend composition of Claim 1.

4. An article comprising one or more blown films comprising the polyethylene blend-composition of Claim 1.

5. A container device comprising:

a. one or more substrates; and
b. one or more layers comprising one or more blown films comprising the polyethylene blend-composition of Claim 1.


**Patentansprüche**

1. Eine Polyethylenmischungszusammensetzung, die für eine Blasfolie geeignet ist, beinhaltend das Schmelzmischprodukt von:

zu 0,5 bis 5 Gewichtsprozent oder weniger einem ersten Polyethylen niedriger Dichte, das eine Dichte im Bereich von 0,915 bis 0,935 g/cm$^3$, gemessen gemäß ASTM D792, Methode B, und einen Schmelzindex ($I_2$) im Bereich von mehr als 0,8 bis weniger als oder gleich 5g/10 Minuten, gemessen gemäß ASTM D-1238 bei 190 °C und bei 2,16 kg, und eine Molekulargewichtsverteilung ($M_w/M_n$) im Bereich von 6 bis 10 aufweist; zu 5 bis 50 Gewichtsprozent einem zweiten Polyethylen niedriger Dichte, das eine Dichte im Bereich von 0,915 bis 0,935 g/cm$^3$, gemessen gemäß ASTM D792, Methode B, und einen Schmelzindex ($I_2$) im Bereich von 0,1 bis weniger als oder gleich 5 g/10 Minuten, gemessen gemäß ASTM D-1238 bei 190 °C und bei 2,16 kg, und eine Molekulargewichtsverteilung ($M_w/M_n$) im Bereich von 6 bis 10 aufweist; mit der Maßgabe, dass das zweite Polyethylen niedriger Dichte einen Schmelzindex ($I_2$) aufweist, der sich von dem Schmelzindex ($I_2$) des ersten Polyethylens niedriger Dichte unterscheidet; zu 44 Gewichtsprozent oder mehr einem heterogenen, linearen Polyethylen niedriger Dichte, das eine Dichte im Bereich von 0,917 bis 0,950 g/cm$^3$, gemessen gemäß ASTM D792, Methode B, und einen Schmelzindex ($I_2$) im Bereich von 0,1 bis weniger als oder gleich 5g/10 Minuten, gemessen gemäß ASTM D-1238 bei 190 °C und bei 2,16 kg, aufweist;

gegebenenfalls einem Neutralisationsmittel auf Hydrotalkit-Basis;

gegebenenfalls einem oder mehreren Keimbildnern; und

gegebenenfalls einem oder mehreren Antioxidationsmitteln.

2. Polyethylenmischungszusammensetzung gemäß Anspruch 1, wobei die Polyethylenmischungszusammensetzung einen Peak bei 32,7 ppm, gemessen mittels $^{13}$C-NMR, aufweist, was auf die Gegenwart des $C_3$-Kohlenstoffs eines $C_5$- oder Amylzweigs von entweder der ersten LDPE-Komponente oder der zweiten LDPE-Komponente hinweist.

3. Eine Blasfolie, beinhaltend die Polyethylenmischungszusammensetzung gemäß Anspruch 1.

4. Ein Gegenstand, beinhaltend eine oder mehrere Blasfolien, beinhaltend die Polyethylenmischungszusammensetzung gemäß Anspruch 1.

**5.** Eine Behältervorrichtung, beinhaltend:

a. ein oder mehrere Substrate; und
b. eine oder mehrere Schichten, beinhaltend eine oder mehrere Blasfolien, beinhaltend die Polyethylenmischungszusammensetzung gemäß Anspruch 1.

**Revendications**

**1.** Une composition de mélange homogène de polyéthylène appropriée pour des films soufflés comprenant le produit de mélange homogène à l'état fondu de :

de 0,5 à 5 pour cent ou moins en poids d'un premier polyéthylène basse densité ayant une masse volumique comprise dans la gamme allant de 0,915 à 0,935 g/cm$^3$ mesurée selon l'ASTM D792, méthode B, et un indice de fluidité à chaud ($I_2$) compris dans la gamme allant de supérieur à 0,8 à inférieur ou égal à 5 g/10 minutes mesuré conformément à l'ASTM D-1238 à 190°C et à 2,16 kg, et une distribution de masses moléculaires ($M_w/M_n$) comprise dans la gamme allant de 6 à 10 ;
de 5 à 50 pour cent en poids d'un second polyéthylène basse densité ayant une masse volumique comprise dans la gamme allant de 0,915 à 0,935 g/cm$^3$ mesurée selon l'ASTM D792, méthode B, et un indice de fluidité à chaud ($I_2$) compris dans la gamme allant de 0,1 à inférieur ou égal à 5 g/10 minutes mesuré conformément à l'ASTM D-1238 à 190°C et à 2,16 kg, et une distribution de masses moléculaires ($M_w/M_n$) comprise dans la gamme allant de 6 à 10 ; à condition que le second polyéthylène basse densité ait un indice de fluidité à chaud ($I_2$) différent de l'indice de fluidité à chaud ($I_2$) du premier polyéthylène basse densité ;
de 44 pour cent ou plus en poids d'un polyéthylène basse densité linéaire hétérogène ayant une masse volumique comprise dans la gamme allant de 0,917 à 0,950 g/cm$^3$ mesurée selon l'ASTM D792, méthode B, et un indice de fluidité à chaud ($I_2$) compris dans la gamme allant de supérieur à 0,1 à inférieur ou égal à 5 g/10 minutes mesuré conformément à l'ASTM D-1238 à 190 °C et à 2,16 kg ;
éventuellement un agent de neutralisation à base d'hydrotalcite ;
éventuellement un ou plusieurs agents de nucléation ; et
éventuellement un ou plusieurs antioxydants.

**2.** La composition de mélange homogène de polyéthylène de la revendication 1, la composition de mélange homogène de polyéthylène ayant un pic à 32,7 ppm mesuré par RMN $^{13}$C, indiquant la présence du carbone en $C_3$ d'une ramification en $C_5$ ou amyle de l'un ou l'autre du premier constituant PEBD ou du second constituant PEBD.

**3.** Un film soufflé comprenant la composition de mélange homogène de polyéthylène de la revendication 1.

**4.** Un article comprenant un ou plusieurs films soufflés comprenant la composition de mélange homogène de polyéthylène de la revendication 1.

**5.** Un dispositif conteneur comprenant :

a. un ou plusieurs substrats ; et
b. une ou plusieurs couches comprenant un ou plusieurs films soufflés comprenant la composition de mélange homogène de polyéthylène de la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100317804 A

- US 20090192270 A

**Non-patent literature cited in the description**

- **WILLIAMS ; WARD.** *J. Polym. Sci., Polym. Letters,* 1968, vol. 6, 621